# EUROPÄISCHE PATENTSCHRIFT

(11) **EP 3 381 556 B1**
(45) Veröffentlichungstag und Bekanntmachung des Hinweises auf die Patenterteilung: **17.06.2020**
(21) Anmeldenummer: 18151395.3
(22) Anmeldetag: 12.01.2018
(51) Int. Cl.: G01N 21/47, G01N 21/00, G01F 23/292

(54) **VERFAHREN ZUR CHARAKTERISIERUNG EINES FLÜSSIGKEITSTRANSPORTS EINER TRANSPARENTEN FLÜSSIGKEIT, KORRESPONDIERENDE FLÜSSIGKEITSTRANSPORT-CHARAKTERISIERUNGSVORRICHTUNG UND KORRESPONDIERENDES TRÄGERMATERIAL**
METHOD OF CHARACTERISING A LIQUID TRANSPORT OF A TRANSPARENT LIQUID, CORRESPONDING LIQUID TRANSPORTING CHARACTERIZATION DEVICE AND CORRESPONDING SUPPORT MATERIAL
PROCÉDÉ DE CARACTÉRISATION D'UN TRANSPORT D'UN LIQUIDE TRANSPARENT, DISPOSITIF DE CARACTÉRISATION DE TRANSPORT DE LIQUIDE CORRESPONDANT ET MATÉRIEL DE SUPPORT CORRESPONDANT

(30) Priorität: 23.01.2017 DE 102017101221
(43) Veröffentlichungstag der Anmeldung: 03.10.2018
(73) Patentinhaber: Testo SE & Co. KGaA, 79853 Lenzkirch (DE)
(72) Erfinder: Butzküven, Astrid, 79256 Buchenbach (DE); von Olshausen, Philipp, 79106 Freiburg (DE); Rieger, Robert, 79117 Freiburg (DE)
(74) Vertreter: Börjes-Pestalozza, Henrich

(56) Entgegenhaltungen:
- WO-A1-2010/007210
- US-A1- 2005 189 225
- SUBHADEEP MUKHOPADHYAY ET AL: "Nanoscale surface modifications to control capillary flow characteristics in PMMA microfluidic devices", NANOSCALE RESEARCH LETTERS, Bd. 6, Nr. 411, 3. Juni 2011 (2011-06-03), Seiten 1-12, XP055480762, ISSN: 1556-276X, DOI: 10.1186/1556-276X-6-411
- BUNDGAARD F ET AL: "A Simple Opto-Fluidic Switch Detecting Liquid Filling in Polymer-Based Microfluidic Systems", SOLID-STATE SENSORS, ACTUATORS AND MICROSYSTEMS CONFERENCE, 2007. TRANSDUCERS 2007. INTERNATIONAL, IEEE, PISCATAWAY, NJ, USA, 10. Juni 2007 (2007-06-10), Seiten 759-762, XP031216141, ISBN: 978-1-4244-0841-2

## Beschreibung

Die Erfindung betrifft ein Verfahren zur Charakterisierung eines Flüssigkeitstransports einer transparenten Flüssigkeit in einer mikrofluidischen Struktur, wobei die transparente Flüssigkeit einen Meniskus formt, der einen unbefüllten Abschnitt von einem mit der transparenten Flüssigkeit befüllten Abschnitt der mikrofluidischen Struktur trennt, und wobei Licht aus einer Umgebung des Meniskus aufgefangen und zur Ermittlung einer Messgröße, die mit einem durch den Meniskus erreichten Füllstand der transparenten Flüssigkeit korreliert, ausgemessen wird.

Die Erfindung betrifft weiter eine Flüssigkeitstransport-Charakterisierungsvorrichtung.

Die Erfindung betrifft schließlich ein Trägermaterial mit einer mikrofluidischen Struktur.

Es ist bekannt, Flüssigkeiten in mikrofluidischen Strukturen zu transportieren. Hier ist es häufig von Interesse, das Fließverhalten oder den Transport der Flüssigkeit zu charakterisieren. Es sind unterschiedliche Verfahren vorgeschlagen worden, die im Wesentlichen die Erfassung der Änderung eines optischen Lichtstrahls, der in die Flüssigkeit eingestrahlt wird, vorsehen, wobei das Entstehen oder Verschwinden einer Totalreflexion überwacht wird.

In dem Artikel "Nanoscale surface modifications to control capillary flow characteristics in PMMA microfluidic devices", von Mukhopadhyay et. al, erschienen in den Nanoscale Research Letters 2011, 6:411, wird zur Charakterisierung eines Flüssigkeitstransports durch einen Mikrokanal in einem PMMA-Substrat aufgrund einer passiven kapillaren Befüllung ein Verfahren vorgeschlagen, das genauer in der Veröffentlichung "Controlling the hydrophilicity of microchannels with bonding adhesives containing surfactants" von Lim et al., erschienen im Journal of Micromechanics and Microengineering 2006, 16: N9-N16, beschrieben ist. Dieses Verfahren nutzt ein optisches Mikroskop mit angeschlossener Kamera, um anhand von mit der Kamera aufgenommenen Videobildern der kapillaren Befüllung und einer bekannten zeitlichen Auflösung der Videobilder auf die volumetrische Flussrate der Befüllung zurückzuschließen. Dazu wird die Flüssigkeit mit einem Farbstoff angereichert, sodass mit Hilfe der Videobilder die jeweilige Position des in dem Mikrokanal voran schreitenden Flüssigkeitsmeniskus bestimmt werden kann. Sofern die Dimensionen des Flüssigkeitskanals bekannt sind, lässt sich daraus die volumetrische Flussrate näherungsweise berechnen.

Die Erfindung stellt sich die Aufgabe, ein alternatives Verfahren zu Charakterisierung des Flüssigkeitstransports zu schaffen.

Erfindungsgemäß sind zur Lösung der Aufgabe die Merkmale des Anspruchs 1 vorgesehen.

Die Erfindung bietet den Vorteil, dass ein Strahlengang von Licht zur Untersuchung nicht genau eingerichtet werden muss, um die exakten Verhältnisse zu erreichen, die zur Einstellung oder zur Unterdrückung von Totalreflexion erforderlich sind. Somit sind weniger konstruktive Nebenbedingungen bei der Gestaltung der mikrofluidischen Struktur und bei der Ausgestaltung eines optischen Charakterisierungsverfahrens zur Charakterisierung des Flüssigkeitstransports zu beachten. Das Design eines Flüssigkeitstransport-Charakterisierungsverfahrens kann somit vereinfacht werden.

Bei einer Ausgestaltung der Erfindung kann vorgesehen sein, dass die Größe zur Charakterisierung des Flüssigkeitstransports ein Füllstand ist. Von Vorteil ist dabei, dass direkte Aussagen über eine Füllmenge, die in die mikrofluidische Struktur gefördert wurde, ermöglicht sind.

Alternativ oder zusätzlich kann vorgesehen sein, dass die Größe zur Charakterisierung des Flüssigkeitstransports eine Fortschreitungsgeschwindigkeit ist. Von Vorteil ist dabei, dass direkte Aussagen über eine Veränderung der Befüllung der mikrofluidischen Struktur ermöglicht sind. Besonders günstig ist es, wenn die Größe zur Charakterisierung des Flüssigkeitstransports eine Fortschreitungsgeschwindigkeit des Meniskus ist. Somit lässt sich durch Integration ein Füllstand, beispielsweise der bereits erwähnte Füllstand, direkt errechnen. Umgekehrt kann die Fortschreitungsgeschwindigkeit des Meniskus ermittelt werden, indem der bereits erwähnte Füllstand nach der Zeit abgeleitet wird. Eine Fortschreitungsgeschwindigkeit erlaubt auch Rückschlüsse auf eine (mittlere) Fließgeschwindigkeit der Flüssigkeit, beispielsweise wenn das Strömungsverhalten laminar oder verwirbelungsarm ist. Es ist somit auch eine Flussrate der Flüssigkeit, beispielsweise als Volumen pro Zeiteinheit, erfassbar.

Bei einer Ausgestaltung der Erfindung kann vorgesehen sein, dass der Anteil der Innenwand berechnet wird, indem eine Größe eines mit der Flüssigkeit befüllten Teils der mikrofluidischen Struktur bestimmt oder mit einer korrespondierenden Gesamtgröße der mikrofluidischen Struktur ins Verhältnis gesetzt wird. Beispielsweise kann diese Größe eine Ausdehnung oder Länge in einer Erstreckungsrichtung sein. Von Vorteil ist dabei, dass nur eine eindimensionale Größe betrachtet werden muss, was insbesondere dann günstig ist, wenn die mikrofluidische Struktur einen konstanten Querschnitt aufweist. Mit einem konstanten Querschnitt ist außerdem erreichbar, dass die Flüssigkeit hindernisfrei in der mikrofluidischen Struktur strömen kann.

Ist zumindest eine Höhe (z.B. die Höhe quer zur Verlaufsrichtung, in einer Aufnahmerichtung und/oder senkrecht zu einer Fläche, die beobachtet wird) in Verlaufsrichtung konstant, so kann aus einem Flächeninhalt eines benetzten Anteils der Innenwand, insbesondere aus dem Flächeninhalt des befüllten Abschnitts der mikrofluidischen Struktur, auf das Füllvolumen geschlossen werden.

Bei einer Ausgestaltung der Erfindung kann vorgesehen sein, dass die Innenwand eine raue Oberfläche bietet. Somit ist auf einfache Weise diffus gestreutes Licht erzeugbar, welches eine unbenetzte Innenwand anzeigt.

Bei einer Ausgestaltung der Erfindung kann vorgesehen sein, dass eine Flüssigkeit verwendet wird, die Rauigkeitsstrukturen der Oberfläche bei einer Benetzung ausfüllt. Von Vorteil ist dabei, dass eine diffuse Streuung von Licht nach Benetzung unterbindbar ist. Somit lassen sich unbenetzte und benetzte Teile der Innenwand einfach voneinander unterscheiden. Hierbei ist es besonders günstig, wenn die Brechzahlen (Brechungsindizes) von Flüssigkeit und die Innenwand bildendem Trägermaterial eine Differenz haben, die betragsmäßig verschieden ist von einer Differenz der Brechzahlen von Luft und die Innenwand bildendem Trägermaterial, wie weiter unten genauer beschrieben.

Alternativ oder zusätzlich kann vorgesehen sein, dass eine Flüssigkeit verwendet wird, die nicht selbsttätig auf der Oberfläche kriecht. Von Vorteil ist dabei, dass ein definierter Füllstand eingenommen ist, welcher zur Charakterisierung eines befüllten Volumens der mikrofluidischen Struktur und somit des Flüssigkeitstransports der Flüssigkeit geeignet ist. Bevorzugt wird die Flüssigkeit mittels eines von außen angelegten oder eingebrachten Drucks gefördert oder transportiert.

Bei einer Ausgestaltung der Erfindung kann vorgesehen sein, dass die mikrofluidische Struktur eine Höhe aufweist, die eine eindeutige Beziehung zwischen einer benetzten Fläche der Innenwand und einem zugehörigen befüllten Volumen der mikrofluidischen Struktur erlaubt. Dies kann beispielsweise dadurch erreicht sein, dass die Höhe so gewählt ist, dass immer entweder beide Seiten, die die Höhe definieren, gleichermaßen benetzt oder unbenetzt sind. Somit lassen sich definierte Füllverhältnisse der mikrofluidischen Struktur erreichen, die eine einfache Überwachung des Füllstandes oder der Fortschreitungsgeschwindigkeit des Meniskus erlauben.

Bei einer Ausgestaltung der Erfindung kann vorgesehen sein, dass die mikrofluidische Struktur derart ausgebildet ist, dass die mikrofluidische Struktur in jedem Abschnitt, also beispielsweise an jeder Stelle eines die mikrofluidische Struktur bildenden Kanals, entweder vollständig befüllt oder unbenetzt ist. Dies kann beispielsweise durch eine Materialwahl des Trägermaterials und/oder durch eine geometrische Dimensionierung der mikrofluidischen Struktur erreicht sein. Von Vorteil ist dabei, dass eine Blasenbildung oder eine Tröpfchenbildung in befüllten Abschnitten der mikrofluidischen Struktur vermeidbar ist. Somit sind Volumenmessungen oder Aussagen über befüllte Volumina mit größerer Genauigkeit treffbar. Besonders günstig ist es dabei, wenn ein Benetzungswinkel an dem Meniskus zwischen 45° und 135° liegt. Es hat sich herausgestellt, dass derartige Benetzungswinkelwerte vorteilhaft für eine definierte Ausbildung eines Abschlusses des befüllten Volumens durch den Meniskus sind.

Bei einer vorteilhaften Ausgestaltung kann vorgesehen sein, dass die mikrofluidische Struktur in einem transparenten Trägermaterial ausgebildet ist. Von Vorteil ist dabei, dass ein Licht zur Erzeugung eines diffusen Streulichtes einfach von außen einstrahlbar ist. Hierbei kann die Abdeckung, beispielsweise als Folie oder als Platte, transparent oder intransparent oder auf andere Weise ausgebildet sein.

Bei einer Ausgestaltung der Erfindung kann ein lichter Innenquerschnitt der mikrofluidischen Struktur so gestaltet sein, dass ein Durchbiegen des Meniskus im Wesentlichen keine Änderung des Füllstandes oder Füllvolumens bedingt. Eine Erfassung eines Krümmungsradius am Meniskus ist somit zur Volumen- oder Füllstandsmessung verzichtbar. Bevorzugt ist hierbei der Innenquerschnitt im Verhältnis zu einer intrinsischen Gesamtlänge der mikrofluidischen Struktur so gewählt, dass sich ein linienförmiger Verlauf ergibt. Günstig ist es wenn der Innenquerschnitt derart gewählt ist, dass Kapillarkräfte noch wirken, so dass die Flüssigkeit nicht von einer oberen Abdeckung oder dergleichen Begrenzung abreißt und sich keine Blasen bilden. Eine möglichst geringe Höhe des Innenquerschnitts hat den Vorteil, dass eine hohe Messgenauigkeit erreichbar ist.

Wie zuvor beschrieben, ist ein möglichst kleiner Querschnitt der Struktur vorteilhaft. Soll ein großes Gesamtvolumen in der Struktur realisiert werden, so ergibt sich oft die vorteilhafte Ausbildung als linienförmige Struktur oder als linienförmiger Kanal.

Hierbei oder bei einer weiteren Ausgestaltung der Erfindung kann somit vorgesehen sein, dass die mikrofluidische Struktur linienförmig ausgebildet ist. Eine Linienform kann sich beispielsweise dadurch ergeben oder kann beispielsweise dadurch charakterisierbar sein, dass eine Ausdehnung in Verlaufsrichtung wesentlich, insbesondere mindestens 10fach oder mindestens 100fach, größer als eine Breite und/oder Höhe ist. Die linienförmige Ausbildung der Struktur hat den Vorteil, dass eine Wahrscheinlichkeit von Lufteinschlüssen und/oder Blasen in der Flüssigkeit reduzierbar ist. Von Vorteil ist dabei, dass eine Verfolgung eines Befüllens durch Erfassung des Füllstandes besonders einfach ausführbar ist. Bevorzugt ist die linienförmige Struktur so ausgebildet, dass sie eine Fläche ausfüllt. Dies hat den Vorteil, dass eine besonders kompakte Anordnung der mikrofluidischen Struktur erreichbar ist, die einen möglichst geringen Platzverbrauch hat. Beispielsweise kann die mikrofluidische Struktur mäandrierend (mäanderförmig) ausgebildet sein.

Bei einer Ausgestaltung der Erfindung kann vorgesehen sein, dass die Flüssigkeit von außerhalb der mikrofluidischen Struktur beleuchtet wird. Dies kann beispielsweise durch eine natürliche Lichtquelle oder durch eine künstliche Lichtquelle erreichbar sein. Von Vorteil ist dabei, dass die mikrofluidische Struktur, bevorzugt aus transparentem Trägermaterial, einfach ausgestaltbar ist.

Alternativ oder zusätzlich kann vorgesehen sein, dass die mikrofluidische Struktur mit einer Dunkelfeldmethode und/oder diffus beleuchtet wird. Von Vorteil ist dabei, dass eine direkte Beleuchtung eines Detektors, mit dem das diffus gestreute Licht erfasst wird, vermeidbar ist. Somit lassen sich erhöhte Messempfindlichkeiten des (möglicherweise schwach) gestreuten Lichtes erreichen.

Unter einer Dunkelfeldmethode kann allgemein ein Verfahren verstanden werden, bei welchem direkte Lichtstrahlung, die auf die mikrofluidische Struktur eingestrahlt wird, an dem erwähnten Detektor vorbei geht, sodass der Detektor nur das diffus gestreute Licht erfasst. Gegebenenfalls ist der Detektor zusätzlich so angeordnet, dass auch ein (gerichtet) reflektiertes Licht am Detektor vorbeigeht. Von Vorteil ist dabei, dass somit ein dunkler Bildhintergrund geschaffen ist, von dem sich die (unbenetzte) Innenwand deutlich aufgrund des diffus gestreuten Lichtes abhebt. Dies ist einfach optisch erfassbar und weiterverarbeitbar.

Bei einer ausgestalteten Erfindung kann vorgesehen sein, dass zum Ausmessen der Messgröße wenigstens eine Aufnahme der mikrofluidischen Struktur erfasst wird. Von Vorteil ist dabei, dass eine optische Auswertung, beispielsweise über eine Intensität und/oder über eine Merkmalsanalyse, zur Charakterisierung eines Füllstandes und/oder einer Fortschreitungsgeschwindigkeit durchführbar ist. Besonders günstig ist es, wenn eine fotografische Aufnahme erstellt wird. Somit sind bekannte Verfahren der Bildverarbeitung, insbesondere der Merkmalsdetektion, verwendbar.

Hierbei kann vorgesehen sein, dass zum Ausmessen der Messgröße ein Differenzbild zwischen einer Aufnahme der mikrofluidischen Struktur und einer vorangegangen Aufnahme der mikrofluidischen Struktur gebildet wird. Von Vorteil ist dabei, dass ein in einer Zwischenzeit befülltes Teilvolumen der mikrofluidischen Struktur einfach erfassbar ist, beispielsweise um eine einfache Charakterisierung einer Veränderung des Füllstandes zu erhalten.

Erfindungsgemäß ist vorgesehen, dass zum Auswerten der Messgröße eine Intensität des diffus gestreuten Lichts erfasst wird. Dies kann beispielsweise durch Auswertung einer Aufnahme oder durch integrale Erfassung der Intensität erfolgen. Von Vorteil ist dabei, dass auf einfache Weise eine Messgröße gewonnen wird, die mit einem Flächeninhalt der diffus streuenden Innenwand korreliert, woraus auf einfache Weise Füllstände und/oder Fortschreitungsgeschwindigkeiten ableitbar sind. Insbesondere kann hierbei vorgesehen sein, dass zum Ausmessen der Messgröße eine Differenz zwischen einer erfassten Intensität des diffus gestreuten Lichts und einer vorangehenden erfassten Intensität des diffus gestreuten Lichts gebildet wird. Somit sind auf einfache Weise - auch ohne Erfassung einer Aufnahme und/oder ohne aufwendige Auswertung einer derartigen Aufnahme - Informationen über den Füllstand erhaltbar. Denn die Erfindung hat erkannt, dass dann, wenn die Flüssigkeit durch Benetzung der Innenwand eine diffuse Streuung unterdrücken kann, ein Rückschluss auf ein befülltes Volumen einfach durch Auswertung der Intensität des gestreuten Lichtes erreichbar ist.

Bei einer Ausgestaltung der Erfindung kann vorgesehen sein, dass Brechzahlen von Flüssigkeit, Trägermaterial und Luft so gewählt sind, dass eine erste Differenz zwischen den Brechzahlen von Luft und Trägermaterial und eine zweite Differenz zwischen den Brechzahlen von Flüssigkeit und Trägermaterial betragsmäßig derart unterschiedlich sind, dass eine wahrnehmbare Intensitätsänderung des Streulichts am Übergang zwischen Luft und Flüssigkeit erreicht wird. Somit sind auf einfache Weise einfach optisch erfassbare Zustände zur Unterscheidung von unbenetzten und benetzten Abschnitten der mikrofluidischen Struktur erreichbar. Beispielsweise kann die Brechzahl der Flüssigkeit zwischen der Brechzahl des Trägermaterials und der Brechzahl von Luft liegen, oder es kann eine Flüssigkeit mit einer, beispielsweise sehr großen, Brechzahl, die oberhalb der Brechzahl von Luft und der Brechzahl des Trägermaterials liegt, verwendet werden.

Bei einer Ausgestaltung der Erfindung kann vorgesehen sein, dass die mikrofluidische Struktur ein Volumen bereitstellt, welches größer ist als das Volumen der Flüssigkeit. Somit ist vermeidbar, dass die mikrofluidische Struktur im Laufe des Charakterisierungsverfahrens vollständig befüllt ist und somit in eine beispielsweise nachgestaltete Fördereinrichtung oder in ein nachgeschaltetes Reservoir gelangt.

Zur Lösung der genannten Aufgabe schlägt die Erfindung außerdem die Merkmale des nebengeordneten, auf eine Flüssigkeitstransport-Charakterisierungsvorrichtung gerichteten Anspruchs vor. Somit schlägt die Erfindung zur Lösung der genannten Aufgabe bei einer Flüssigkeitstransport-Charakterisierungsvorrichtung vor, Mittel zur Ausführung eines erfindungsgemäßen Verfahrens, insbesondere wie zuvor beschrieben und/oder nach einem der auf ein Verfahren gerichteten Ansprüche, auszubilden.

Beispielsweise kann somit ein Detektor, insbesondere eine Kamera, zur Erfassung einer Größe, die mit einer Intensität eines an einer Innenwand der mikrofluidischen Struktur diffus gestreuten Lichts korreliert, eingerichtet sein. Diese Messgröße kann beispielsweise wenigstens ein (lokaler) Helligkeitswert in einer Aufnahme und/oder ein integraler Helligkeitswert einer Aufnahme oder das Ergebnis einer integralen Intensitätsmessung sein.

So kann beispielsweise zum Einstrahlen von Licht zur Erzeugung des diffus gestreuten Lichts eine Beleuchtungseinrichtung vorhanden sein.

Zur Lösung der genannten Aufgabe sind weiter die Merkmale des nebengeordneten, auf ein Trägermaterial gerichteten Anspruchs vorgesehen. Insbesondere wird somit bei einem Trägermaterial erfindungsgemäß vorgeschlagen, eine mikrofluidische Struktur auszubilden, wobei die mikrofluidische Struktur in einem Abschnitt an einer Innenwand eine raue Oberfläche aufweist, welche in einem unbenetzten Zustand Licht diffus streut, wobei in einem mit einer transparenten Flüssigkeit benetzten Zustand eine Intensität diffus gestreuten Lichts verändert ist. Dies kann beispielsweise durch eine Verminderung, insbesondere auf weniger als die Hälfte, vorzugsweise weniger als ein Zehntel, erreicht sein.

Bevorzugt ist das Trägermaterial zur Verwendung bei einer erfindungsgemäßen Flüssigkeitstransport-Charakterisierungsvorrichtung ausgebildet. Somit ist ein Verbrauchsmaterial bereitstellbar, an welchem das erfindungsgemäße Verfahren ausführbar ist. Alternativ oder zusätzlich kann vorgesehen sein, dass das Trägermaterial zur Verwendung bei einem erfindungsgemäßen Verfahren, insbesondere wie zuvor beschrieben und/oder nach einem der auf ein Verfahren gerichteten Ansprüche, ausgebildet ist.

Das Trägermaterial kann allgemein flach, insbesondere plattenförmig, ausgebildet sein, beispielsweise starr oder flexibel. Als Plattenform kann beispielsweise eine Form bezeichnet werden, deren Ausdehnung in einer Dimension (z.B. der Höhe) wesentlich geringer als in den zwei anderen Dimensionen (z.B. Länge und Breite) ist. Plattenförmige Trägermaterialien sind besonders geeignet für die optische Untersuchung im erfindungsgemäßen Verfahren, weil eine Lichtschwächung bei seitlicher Einstrahlung, also einer Einstrahlung auf eine durch die großen Ausdehnungen aufgespannte Fläche, gering haltbar ist.

Hierbei kann das Trägermaterial gegossen sein, vorzugsweise in Spritzguss. Dies ermöglicht beispielsweise eine günstige Herstellung des Trägermaterials, beispielsweise als Einmalprodukt.

Das plattenförmige Trägermaterial kann allgemein strukturiert und mit einer transparenten Schicht oder Abdeckung, beispielsweise einer Folie oder einer weiteren Platte, bedeckt sein, um die mikrofluidische Struktur zu bilden.

Das flache Trägermaterial kann mit einer beliebigen Umfangskontur ausgebildet sein. Eine Umfangskontur, die einen Polygonzug, beispielsweise ein Rechteck oder ein regelmäßiges Polygon, beschreibt, kann günstig sein, um eine in der Regel rechteckige Oberfläche eines Spritzgusswerkzeug effizient ausnutzen zu können. Es sind jedoch auch kuchenstückförmige, runde oder unregelmäßige Umfangskonturen verwendbar.

Die Erfindung wird nun anhand von Ausführungsbeispielen näher beschrieben, ist jedoch nicht auf diese Ausführungsbeispiele beschränkt. Weitere Ausführungsbeispiele ergeben sich durch Kombination der Merkmale einzelner oder mehrerer Schutzansprüche untereinander und/oder mit einzelnen oder mehreren Merkmalen der Ausführungsbeispiele.

Es zeigt:
- Fig. 1: eine erfindungsgemäße Flüssigkeitstransport-Charakterisierungsvorrichtung mit einer unbefüllten mikrofluidischen Struktur,
- Fig. 2: das erfindungsgemäße Verfahren bei der Flüssigkeitstransport-Charakterisierungsvorrichtung nach Figur 1,
- Fig. 3: eine Detailansicht von Figur 2 zur Erläuterung des erfindungsgemäßen Verfahrens,
- Fig. 4: eine Detailansicht analog zu Figur 3 bei einer weiteren erfindungsgemäßen Variante einer Flüssigkeitstransport-Charakterisierungsvorrichtung,
- Fig. 5: eine Detailansicht einer Innenwand der mikrofluidischen Struktur nach Figur 3 oder 4 mit einer rauen Oberfläche,
- Fig. 6: eine Detailansicht einer Innenwand der mikrofluidischen Struktur nach Figur 3 oder 4 mit einer weiteren Variante einer rauen Oberfläche,
- Fig. 7: eine Draufsicht auf eine mikrofluidische Struktur und
- Fig. 8: eine Draufsicht auf eine weitere mikrofluidische Struktur mit einem mäanderförmigen Verlauf.

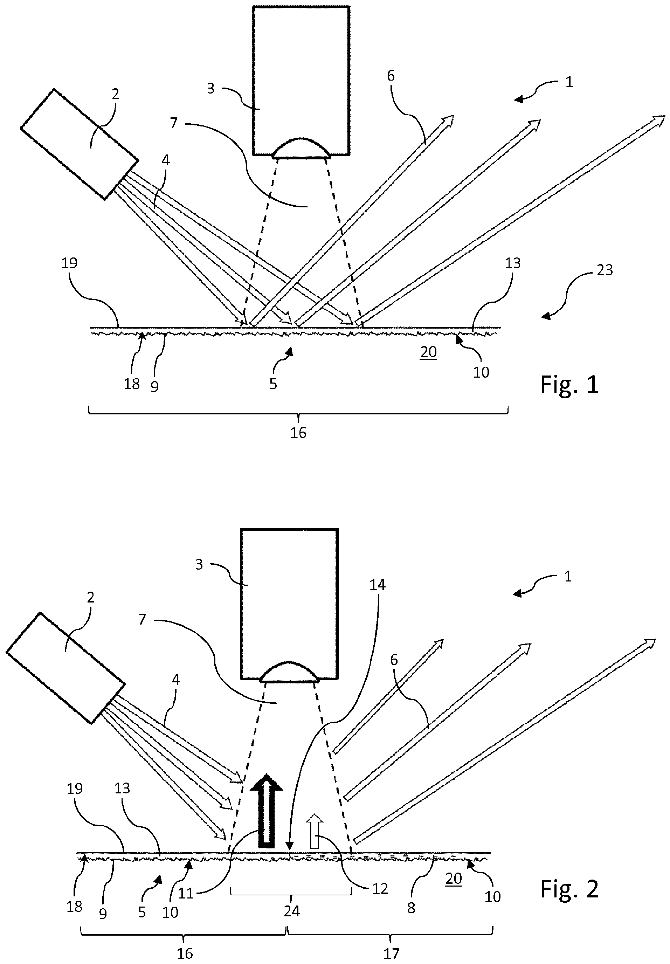

Figur 1 zeigt in einer allgemeinen Prinzipdarstellung eine im Ganzen mit 1 bezeichnete erfindungsgemäße Flüssigkeitstransport-Charakterisierungsvorrichtung.

Die Flüssigkeitstransport-Charakterisierungsvorrichtung 1 weist eine Beleuchtungseinrichtung 2, einen Detektor 3 und einen Aufnahmeraum 23 für ein plattenförmiges Trägermaterial 20 auf.

Die Beleuchtungseinrichtung 2, beispielsweise eine Lichtquelle oder eine Lichtleitvorrichtung wie beispielsweise ein Spiegel, ist dazu eingerichtet, Licht 4 auf das in den Aufnahmeraum 23 eingelegte oder mit der Flüssigkeitstransport-Charakterisierungsvorrichtung 1 fest oder lösbar verbundene Trägermaterial 20 einzustrahlen.

Hierbei sind der Detektor 3 und die Beleuchtungseinrichtung 2 so zueinander angeordnet, dass eine Dunkelfeldbeleuchtung gebildet ist.

In dem Trägermaterial 20 ist in an sich bekannter Weise eine mikrofluidische Struktur 5 ausgebildet, die mit dem eingestrahlten Licht 4 beleuchtet wird.

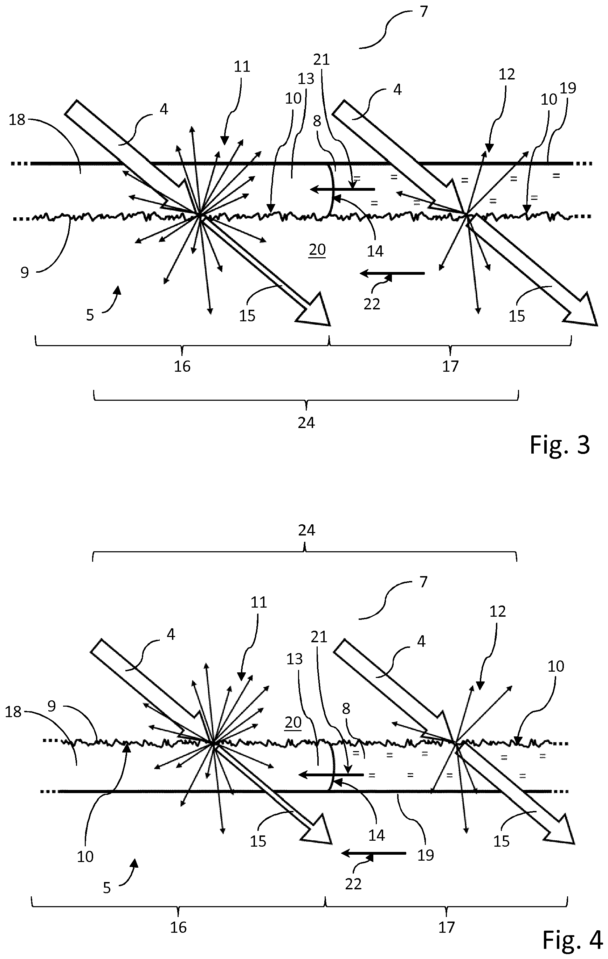

In Figur 1 ist diese mikrofluidische Struktur 5 unbefüllt, sodass - je nach Beschaffenheit des Trägermaterials 20 - das eingestrahlte Licht 4 im Wesentlichen als reflektiertes Licht 6 abgestrahlt wird und/oder als transmittiertes Licht 15 (vgl. Fig. 3, 4) durch das Trägermaterial 20 hindurchtritt.

Der Detektor 3 ist hier so angeordnet, dass dieses reflektierte Licht 6 nicht erfassbar ist, sondern an dem Detektor 3 vorbei verläuft. Wie in Figur 2 dargestellt, gelangt diffus gestreutes Licht 11 zu dem Detektor. Im Vergleich zu der Intensität des reflektierten Lichts 6 ist dieses gestreute Licht vergleichsweise dunkel.

Ein Ausgangssignal des Detektors 3 zeigt jedoch einen im Vergleich zu der nachfolgenden Situation gemäß Figur 2 hellen Erfassungsbereich 7 an.

In Figur 2 ist die Situation gezeigt, dass die mikrofluidische Struktur 5 teilweise mit einer Flüssigkeit 8 befüllt ist. Hierbei ist die mikrofluidische Struktur 5 in einen unbefüllten Abschnitt 16 und einen befüllten Abschnitt 17 unterteilt, die voneinander durch einen Meniskus 14 getrennt sind. Der befüllte Abschnitt 17 ist hierbei vollständig mit der Flüssigkeit 8 befüllt, während der unbefüllte Abschnitt 16 mit Luft 13 aufgefüllt ist.

Der Detektor 3 fängt mit seinem Erfassungsbereich 7 diffus gestreutes Licht 11, 12 auf, das an einer rauen Oberfläche 10 einer Innenwand 9 der mikrofluidischen Struktur 5 gestreut wird.

Hierbei ist die Intensität des diffus gestreuten Lichts 11, welches an einer unbenetzten rauen Oberfläche 10, also im unbefüllten Abschnitt 16, gestreut wird, wesentlich größer, beispielsweise mehr als doppelt so groß oder sogar mehr als zehnmal so groß, als die Intensität des diffus gestreuten Lichts 12, das im befüllten Abschnitt 17 an der rauen Oberfläche 10 gestreut wird. Somit erscheint der Erfassungsbereich 7 in unbefülltem Zustand heller als in (teilweise oder ganz) befülltem Zustand.

Der Detektor 3 misst hierbei als Messgröße eine Größe aus, die mit der Intensität des gestreuten Lichts 11, 12 korreliert. In einem Ausführungsbeispiel nimmt der Detektor 3 ein Bild oder eine Aufnahme des Erfassungsbereichs 7 auf, wobei Bildhelligkeiten der Bildpunkte mit der Intensität des jeweils aufgefangenen gestreuten Lichts 11, 12 korrelieren.

In einem weiteren Ausführungsbeispiel ist der Detektor 3 zur Erfassung eines integralen Helligkeitsanteils für den gesamten Erfassungsbereich 7 eingerichtet.

Eine nicht weiter dargestellte Recheneinheit der Flüssigkeitstransport-Charakterisierungsvorrichtung 1 berechnet aus der erfassten Messgröße einen Anteil der Innenwand 9, die mit der Flüssigkeit 8 benetzt ist. Aus diesem Anteil berechnet die Recheneinheit anschließend eine Größe zur Charakterisierung des Flüssigkeitstransports, beispielsweise einen Füllstand oder eine Fortschreitungsgeschwindigkeit des Meniskus 14.

Figur 3 zeigt eine Detailvergrößerung aus Figur 2.

Es ist ersichtlich, dass die mikrofluidische Struktur 5 einen Kanal 18 aufweist, der in dem Trägermaterial 20 ausgebildet und mit einer Folie 19 oder dergleichen transparenten Schicht oder Abdeckung abgedeckt ist.

Die Dimension des Kanals 18 ist so gebildet, dass die Flüssigkeit 8 immer sowohl die Innenwand 9 als auch die gegenüberliegende Folie 19 oder dergleichen transparente Schicht oder Abdeckung benetzt.

Somit kann aus dem benetzten Anteil der Innenwand 9, also dem Flächeninhalt im befüllten Abschnitt 17 zumindest im Erfassungsbereich 7, auf einfache Weise das Füllvolumen der Flüssigkeit 8 berechnet werden.

Figur 3 zeigt ein Ausführungsbeispiel, bei welchem das eingestrahlte Licht 4 zunächst durch die Folie 19 oder dergleichen transparente Schicht oder Abdeckung und den Kanals 18 tritt, bevor es auf die Innenwand 9 auftrifft und an der rauen Oberfläche 10 diffus gestreut wird. Ein Teil des eingestrahlten Lichts 4 wird nicht diffus gestreut, sondern tritt durch das Trägermaterial 20 als gerichtetes Licht 15 aus beziehungsweise wird - wie in den Figuren 1 und 2 gezeigt als reflektiertes Licht 6 abgestrahlt.

Ein Teil des diffus gestreuten Lichts 11 beziehungsweise des diffus gestreuten Lichts 12 wird in den Erfassungsbereich 7 des Detektor 3 gestreut und somit von dem Detektor 3 erfasst.

Die Darstellung gemäß Figur 3 zeigt, dass der Anteil des diffus gestreuten Lichts 11 in dem unbefüllten Abschnitt 16 deutlich größter ist als der Anteil des diffus gestreuten Lichts 12 in dem befüllten Abschnitt 17. Dies ist darauf zurückzuführen, dass die Benetzung der rauen Oberfläche 10 im befüllten Abschnitt 17 eine diffuse Streuung im Wesentlichen unterdrückt, weil die Rauigkeitsstrukturen der Oberfläche 10 von der Flüssigkeit 8 ausgefüllt werden.

Ist der Detektor 3 als Kamera ausgebildet, so erscheint der befüllte Abschnitt 17 somit dunkler als der unbefüllte Abschnitt 16.

Figur 4 zeigt ein alternatives Ausführungsbeispiel der Erfindung, bei welcher das eingestrahlte Licht 4 zunächst durch das Trägermaterial 20 hindurch eingestrahlt wird, wobei das eingestrahlte Licht 4 anschließend auf die raue Oberfläche 10 trifft, an der es wieder als Licht 11, 12 diffus gestreut wird. Im Übrigen gelten die Ausführungen zu Figur 3 bei Figur 4 entsprechend.

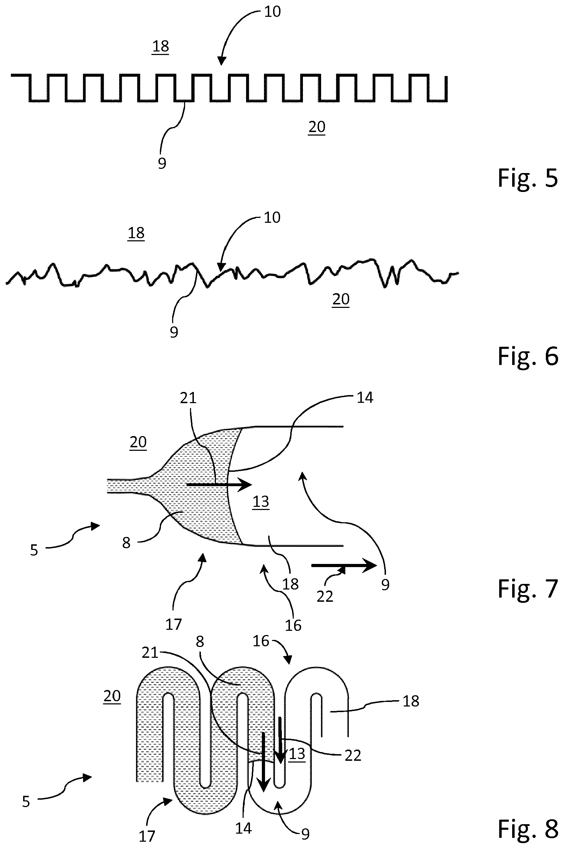

Die Figuren 5 und 6 zeigen beispielhaft unterschiedliche Möglichkeiten, eine raue Oberfläche 10 an der Innenwand 9 auszubilden. Hierzu kann das Trägermaterial 20 regelmäßig (Figur 5) oder zufällig (Figur 6) strukturiert sein.

Die Größe der Strukturierung ist hier so gewählt, dass bei unbenetzter Oberfläche 10 und der verwendeten Wellenlänge des eingestrahlten Lichts 4 ein wesentlicher Anteil des eingestrahlten Lichts 4 diffus gestreut wird.

Die Figuren 7 und 8 zeigen beispielhaft unterschiedliche Ausführungen der mikrofluidischen Struktur 5. Dargestellt sind Ansichten, wie sie mit einem mit einer Kamera ausgerüsteten Detektor 3 erscheinen.

Der mit der Flüssigkeit 8 befüllte Abschnitt 17 erscheint dunkler als der unbefüllte Abschnitt 16.

Durch diesen Kontrastunterschied kann der Flächeninhalt der benetzten Innenwand 9 einfach ermittelt werden. Ist die mikrofluidische Struktur 5 mit einer entlang der Verlaufsrichtung 22 (bis auf Oberflächenrauigkeiten) konstanten Höhe ausgebildet (vergleiche Figur 3 beziehungsweise Figur 4), so lässt sich aus der Erkenntnis des erwähnten Flächeninhalts das Füllvolumen der Flüssigkeit 8 errechnen.

In Figur 7 ist ersichtlich, dass der Meniskus 14 eine Durchbiegung oder Krümmung aufweist, deren Ausbildung aufgrund der Breite des Kanals 18 quer zur Verlaufsrichtung 22 und zur Höhe einen Einfluss auf das tatsächliche Füllvolumen und somit auf den Füllstand hat. Für eine genaue Messung müsste diese Krümmung erfasst und verrechnet werden. Ist die Krümmung zu stark, können sich bei einem Befüllen des Kanals 18 Einschlüsse oder Blasen bilden. Diese verfälschen das Messergebnis und sollten daher vermieden werden, beispielsweise durch eine linienförmige mikrofluidische Struktur 5.

In Figur 8 ist sogar der Fall gezeigt, dass der Querschnitt des Kanals 18 in Verlaufsrichtung im Wesentlichen oder sogar konstant ausgebildet ist. Es ergibt sich insgesamt ein linienförmiger Verlauf. Eine Krümmung des Meniskus hat im Wesentlichen keinen Einfluss auf den Füllstand, so dass es hier ausreichen kann, nur den Verlauf der Meniskuskante zu erfassen.

Figur 8 zeigt außerdem einen mäandrierenden Verlauf des Kanals 18, der eine gute Flächenausnutzung ermöglicht.

Im Betrieb wird in der beschriebenen Weise die Intensität des diffus gestreuten Lichts 11, 12 erfasst, um eine Größe eines mit der Flüssigkeit 8 befüllten Teils der mikrofluidischen Struktur 5, also beispielweise einen Flächeninhalt der Innenwand 9 im befüllten Abschnitt 17 oder einen Füllstand längs der Verlaufsrichtung 22, zu bestimmen oder zumindest mit einer korrespondierenden Gesamtgröße der mikrofluidischen Struktur 5, also beispielsweise dem Gesamtflächeninhalt der Innenwand 9, ins Verhältnis zu setzen.

Unter Ausnutzung einer konstanten Höhe der mikrofluidischen Struktur 5 kann somit ein Füllvolumen berechnet werden.

Im Betrieb strömt die Flüssigkeit 8 in der Fließrichtung 21.

Hierdurch wird ein immer größerer befüllter Abschnitt 17 gebildet, während der unbefüllte Abschnitt 16 abnimmt.

Hieraus resultiert einerseits eine Intensitätsabnahme des insgesamt diffus gestreuten Lichts 11, 12 (da der Anteil des stark gestreuten Lichts 11 abnimmt und der Anteil des schwach gesteuten Lichts 12 zunimmt) und andererseits ein Anwachsen des dunklen Anteils (in einer fotografischen Aufnahme oder dergleichen) der mikrofluidischen Struktur 5.

Durch Aufnahme von Differenzbildern oder durch Vergleich von aufgenommen Intensitäten zu unterschiedlichen Zeitpunkten lässt sich somit eine Veränderung des Füllstandes berechnen, aus der sich die Fortschreitungsgeschwindigkeit der Flüssigkeit 8 und insbesondere des Meniskus 14 ergibt.

Zumindest bei der Ausgestaltung gemäß Figur 4 ist das Trägermaterial 20 transparent ausgebildet, um das eingestrahlte Licht 4 zur Oberfläche 10 zu führen.

Wie bereits erwähnt, ist die mikrofluidische Struktur 5 so geometrisch dimensioniert, dass eine Flüssigkeitsablagerung (beispielsweise als Tropfen) im Kanal 18, bei welcher nicht gleichzeitig die Folie 19 oder dergleichen transparente Schicht oder Abdeckung und die Innenwand 9 benetzt sind, verhindert wird.

Auf diese Weise ist eine eindeutige Beziehung zwischen der benetzten Fläche der Innenwand 9 und einem zugehörigen befüllten Volumen der mikrofluidischen Struktur 5 hergestellt. Insbesondere ist hierbei ein Benetzungswinkel an dem Meniskus 14 eingestellt, der zwischen 45° und 135° liegt.

Um einen Kontrast zwischen unbefülltem Abschnitt 16 und befülltem Abschnitt 17 bei Befüllung eines unbefüllten Abschnitts 16 im Erfassungsbereich 7 zu erzeugen, sind bei den vorgestellten Ausführungsbeispielen die Brechzahlen der Flüssigkeit 8, des Trägermaterials 20 so gewählt, dass die Differenz zwischen den Brechzahlen von Luft 13 und dem Trägermaterial 20 einerseits und die Differenz zwischen den Brechzahlen von Flüssigkeit 8 und Trägermaterial 20 andererseits betragsmäßig unterschiedlich sind.

In den hierfür vorgestellten Ausführungsbeispielen beträgt die Brechzahl der Flüssigkeit 8 ca. 1,33, während das Trägermaterial 20 eine Brechzahl von ca. 1,5 hat. Die Brechzahl von Luft 13 liegt bekannterweise nah bei 1.

Bei dem plattenförmigen Trägermaterial 20, in welchem eine mikrofluidische Struktur 5 ausgebildet ist, wird somit vorgeschlagen, diffus von einer Innenwand 9 gestreutes Licht 11, 12 zu erfassen und einen Füllstand, eine Fortschreitungsgeschwindigkeit oder eine sonstige Größe zur Charakterisierung eines Flüssigkeitstransports einer Flüssigkeit 8 in der mikrofluidischen Struktur 5 aus dem erfassten, diffus gestreuten Lichts 11, 12 rechnerisch zu ermitteln.

### Bezugszeichenliste

- 1: Flüssigkeitstransport-Charakterisierungsvorrichtung
- 2: Beleuchtungseinrichtung
- 3: Detektor
- 4: eingestrahltes Licht
- 5: mikrofluidische Struktur
- 6: reflektiertes Licht
- 7: Erfassungsbereich
- 8: Flüssigkeit
- 9: Innenwand
- 10: raue Oberfläche
- 11: diffus gestreutes Licht (an trockener rauer Oberfläche)
- 12: diffus gestreutes Licht (an benetzter rauer Oberfläche)
- 13: Luft
- 14: Meniskus
- 15: transmittiertes Licht
- 16: unbefüllter Abschnitt
- 17: befüllter Abschnitt
- 18: Kanal
- 19: Folie
- 20: Trägermaterial
- 21: Fließrichtung
- 22: Verlaufsrichtung
- 23: Aufnahmeraum
- 24: Umgebung des Meniskus

## Patentansprüche

1. Verfahren zur Charakterisierung eines Flüssigkeitstransports einer transparenten Flüssigkeit (8) in einer mikrofluidischen Struktur (5), wobei die transparente Flüssigkeit (8) einen Meniskus (14) formt, der einen unbefüllten Abschnitt (16) von einem mit der transparenten Flüssigkeit (8) befüllten Abschnitt (17) der mikrofluidischen Struktur (5) trennt, und wobei Licht (11, 12) aus einer Umgebung (24) des Meniskus (14) aufgefangen und zu einer Ermittlung einer Messgröße, die mit einem durch den Meniskus (14) erreichten Füllstand der transparenten Flüssigkeit (8) korreliert, ausgemessen wird, **dadurch gekennzeichnet, dass** als Messgröße eine Größe, die mit einer Intensität eines an einer Innenwand (9) der mikrofluidischen Struktur (5) diffus gestreuten Lichts (11, 12) korreliert, ausgemessen wird, wobei zum Auswerten der Messgröße eine Intensität des diffus gestreuten Lichts erfasst wird, dass aus der Messgröße ein Anteil der Innenwand (9), der mit der transparenten Flüssigkeit (8) benetzt ist, berechnet wird und dass aus dem berechneten Anteil eine Größe zur Charakterisierung des Flüssigkeitstransports berechnet wird.

2. Verfahren nach Anspruch 1, **dadurch gekennzeichnet, dass** die Größe zur Charakterisierung des Flüssigkeitstransports ein Füllstand ist.

3. Verfahren nach einem der vorangehenden Ansprüche, **dadurch gekennzeichnet, dass** die Größe zur Charakterisierung des Flüssigkeitstransports eine Fortschreitungsgeschwindigkeit, insbesondere des Meniskus (14), oder eine Flussrate ist.

4. Verfahren nach einem der vorangehenden Ansprüche, **dadurch gekennzeichnet, dass** der Anteil der Innenwand (9) berechnet wird, indem eine Größe eines mit der Flüssigkeit (8) befüllten Teils der mikrofluidischen Struktur (5) bestimmt oder mit einer korrespondierenden Gesamtgröße der mikrofluidischen Struktur (5) ins Verhältnis gesetzt wird, und/oder dass die mikrofluidische Struktur (5) eine konstante Höhe, insbesondere einen konstanten Querschnitt, entlang einer Verlaufsrichtung (22) aufweist.

5. Verfahren nach einem der vorangehenden Ansprüche, **dadurch gekennzeichnet, dass** die Innenwand (9) eine raue Oberfläche (10) bildet.

6. Verfahren nach einem der vorangehenden Ansprüche, **dadurch gekennzeichnet, dass** eine Flüssigkeit (8) verwendet wird, die Rauigkeitsstrukturen der Oberfläche (10) bei einer Benetzung ausfüllt und/oder die nicht selbsttätig auf der Oberfläche (10) kriecht.

7. Verfahren nach einem der vorangehenden Ansprüche, **dadurch gekennzeichnet, dass** die mikrofluidische Struktur (5) eine Höhe aufweist, die eine eindeutige Beziehung zwischen einer benetzten Fläche der Innenwand (9) und einem zugehörigen befüllten Volumen der mikrofluidischen Struktur (5) erlaubt.

8. Verfahren nach einem der vorangehenden Ansprüche, **dadurch gekennzeichnet, dass** die mikrofluidische Struktur (5), insbesondere durch eine Materialwahl des Trägermaterials (20) und/oder durch eine geometrische Dimensionierung, derart ausgebildet ist, dass die mikrofluidische Struktur (5) in jedem Abschnitt entweder vollständig befüllt oder unbenetzt ist, insbesondere wobei ein Benetzungswinkel an dem Meniskus (14) zwischen 45° und 135° liegt.

9. Verfahren nach einem der vorangehenden Ansprüche, **dadurch gekennzeichnet, dass** die mikrofluidische Struktur (5) in einem transparenten Trägermaterial (20) ausgebildet ist.

10. Verfahren nach einem der vorangehenden Ansprüche, **dadurch gekennzeichnet, dass** die mikrofluidische Struktur (5) linienförmig, vorzugsweise eine Fläche ausfüllend, insbesondere mäandrierend, ausgebildet ist.

11. Verfahren nach einem der vorangehenden Ansprüche, **dadurch gekennzeichnet, dass** die Flüssigkeit (8) von außerhalb der mikrofluidischen Struktur (5) beleuchtet wird und/oder dass die mikrofluidische Struktur (5) mit einer Dunkelfeldmethode und/oder diffus beleuchtet wird.

12. Verfahren nach einem der vorangehenden Ansprüche, **dadurch gekennzeichnet, dass** zum Ausmessen der Messgröße wenigstens eine Aufnahme der mikrofluidischen Struktur (5) erfasst wird, insbesondere wobei zum Ausmessen der Messgröße ein Differenzbild zwischen einer Aufnahme der mikrofluidischen Struktur (5) und einer vorangegangenen Aufnahme der mikrofluidischen Struktur (5) gebildet wird.

13. Verfahren nach einem der vorangehenden Ansprüche, **dadurch gekennzeichnet, dass** zum Ausmessen der Messgröße eine Intensität des diffus gestreuten Lichts (11, 12) erfasst wird, insbesondere wobei zum Ausmessen der Messgröße eine Differenz zwischen einer erfassten Intensität des diffus gestreuten Lichts (11, 12) und einer vorangehend erfassten Intensität des diffus gestreuten Lichts (11, 12) gebildet wird.

14. Verfahren nach einem der vorangehenden Ansprüche, **dadurch gekennzeichnet, dass** Brechzahlen von Flüssigkeit (8), Trägermaterial (20) und Luft (13) so gewählt sind, dass eine erste Differenz zwischen den Brechzahlen von Luft (13) und Trägermaterial (20) und eine zweite Differenz zwischen den Brechzahlen von Flüssigkeit (8) und Trägermaterial (20) betragsmäßig derart unterschiedlich sind, dass eine wahrnehmbare Intensitätsänderung des Streulichts am Übergang zwischen Luft (13) und Flüssigkeit (8) erreicht wird.

15. Flüssigkeitstransport-Charakterisierungsvorrichtung (1), **gekennzeichnet durch** Mittel zum Ausführen eines Verfahrens nach einem der vorangehenden Ansprüche, mit einem Aufnahmeraum (23) für ein Trägermaterial (20) mit einer mikrofluidischen Struktur (5) gemäß Anspruch 16, wobei ein Detektor (3) zur Erfassung einer Größe, die mit einer Intensität eines an einer Innenwand (9) der mikrofluidischen Struktur (5) diffus gestreuten Lichts (11, 12) korreliert, eingerichtet ist, wobei der Detektor (3) mit einem Erfassungsbereich (7) das diffus gestreute Licht (11, 12) auffängt und wobei der Detektor (3) so angeordnet ist, dass von einer Beleuchtungseinrichtung (2) eingestrahltes Licht, welches als reflektiertes Licht von dem Trägermaterial (20) abgestrahlt wird, nicht erfassbar ist, sondern an dem Detektor (3) vorbei verläuft.

16. Trägermaterial (20) mit einer mikrofluidischen Struktur (5), zur Verwendung bei einer Flüssigkeitstransport-Charakterisierungsvorrichtung (1) nach dem vorangehenden Anspruch und/oder bei einem Verfahren nach einem der Ansprüche 1 bis 14, **dadurch gekennzeichnet, dass** die mikrofluidische Struktur (5) in einem Abschnitt an einer Innenwand (9) eine raue Oberfläche (10) aufweist, welche in einem unbenetzten Zustand Licht (11) diffus streut, wobei in einem mit transparenten Flüssigkeit (8) benetzten Zustand eine Intensität diffus gestreuten Lichts (12) vermindert ist, sodass eine Intensität von diffus an der rauen Oberfläche (10) im unbenetzten Zustand gestreuten Lichts (11) mehr als doppelt so groß ist als eine Intensität des diffus an der rauen Oberfläche (10) in benetztem Zustand gestreuten Lichts (12) .

## Claims

1. Method for characterizing a liquid transport of a transparent liquid (8) in a microfluidic structure (5), wherein the transparent liquid (8) forms a meniscus (14) that separates an unfilled section (16) from a section (17) of the microfluidic structure (5) that is filled with the transparent liquid (8), and wherein light (11, 12) from surroundings (24) of the meniscus (14) is captured and measured for the purposes of ascertaining a measured variable that correlates with a fill level of the transparent liquid (8) reached by the meniscus (14), **characterized in that** a variable that correlates with an intensity of light (11, 12) that is diffusely scattered at an inner wall (9) of the microfluidic structure (5) is measured as a measured variable, wherein an intensity of the diffusely scattered light is detected for evaluating the measured variable, **in that** a proportion of the inner wall (9) which is wetted by the transparent liquid (8) is calculated from the measured variable and **in that** a variable for characterizing the liquid transport is calculated from the calculated proportion.

2. Method according to Claim 1, **characterized in that** the variable for characterizing the liquid transport is a fill level.

3. Method according to any one of the preceding claims, **characterized in that** the variable for characterizing the liquid transport is a speed of advance, in particular of the meniscus (14), or a flow rate.

4. Method according to any one of the preceding claims, **characterized in that** the proportion of the inner wall (9) is calculated by virtue of a size of a part of the microfluidic structure (5) that is filled with the liquid (8) being determined or being related to a corresponding overall size of the microfluidic structure (5) and/or **in that** the microfluidic structure (5) has a constant height, in particular a constant cross section, along a direction of extent (22) .

5. Method according to any one of the preceding claims, **characterized in that** the inner wall (9) forms a rough surface (10).

6. Method according to any one of the preceding claims, **characterized in that** a liquid (8) is used which fills the roughness structures of the surface (10) upon wetting and/or which does not automatically creep along the surface (10).

7. Method according to any one of the preceding claims, **characterized in that** the microfluidic structure (5) has a height which permits an unambiguous relationship between a wetted area of the inner wall (9) and an associated filled volume of the microfluidic structure (5) .

8. Method according to any one of the preceding claims, **characterized in that** the microfluidic structure (5) is embodied, in particular by way of a material choice of the substrate material (20) and/or by way of geometric dimensioning, in such a way that the microfluidic structure (5) is either completely filled or not wetted in each section, in particular wherein a contact angle at the meniscus (14) lies between 45° and 135°.

9. Method according to any one of the preceding claims, **characterized in that** the microfluidic structure (5) is formed in a transparent substrate material (20).

10. Method according to any one of the preceding claims, **characterized in that** the microfluidic structure (5) is embodied in a linear manner, preferably in a manner filling an area, in particular in a meandering manner.

11. Method according to any one of the preceding claims, **characterized in that** the liquid (8) is illuminated from outside the microfluidic structure (5) and/or **in that** the microfluidic structure (5) is illuminated using a dark field method and/or illuminated in a diffuse manner.

12. Method according to any one of the preceding claims, **characterized in that** at least one recording of the microfluidic structure (5) is detected to measure the measured variable, in particular wherein a difference image between a recording of the microfluidic structure (5) and a preceding recording of the microfluidic structure (5) is formed to measure the measured variable.

13. Method according to any one of the preceding claims, **characterized in that** an intensity of the diffusely scattered light (11, 12) is detected to measure the measured variable, in particular wherein a difference between a detected intensity of the diffusely scattered light (11, 12) and a previously detected intensity of the diffusely scattered light (11, 12) is formed to measure the measured variable.

14. Method according to any one of the preceding claims, **characterized in that** refractive indices of liquid (8), substrate material (20) and air (13) are selected in such a way that a first difference between the refractive indices of air (13) and substrate material (20) and a second difference between the refractive indices of liquid (8) and substrate material (20) are so different in terms of absolute value that a perceptible change in intensity of the stray light is obtained at the transition between air (13) and liquid (8) .

15. Liquid transport characterization apparatus (1), **characterized by** means for carrying out a method according to any one of the preceding claims, having a receiving space (23) for a substrate material (20) having a microfluidic structure (5) according to Claim 16, wherein a detector (3) is configured for detecting a variable that correlates with an intensity of light (11, 12) that is diffusely scattered at an inner wall (9) of the microfluidic structure (5), wherein the detector (3) captures the diffusively scattered light (11, 12) with a detecting region (7) and wherein the detector (3) is arranged in such a way that inwardly radiated light from an illumination device (2), which is emitted as reflected light from the substrate material (20), is not detectable, but propagates past the detector (3).

16. Substrate material (20) having a microfluidic structure (5), for use in a liquid transport characterization apparatus (1) according to the preceding claim and/or in a method according to any one of Claims 1 to 14, **characterized in that** the microfluidic structure (5) has a rough surface (10) in a section on an inner wall (9), said rough surface diffusely scattering light (11) in a non-wetted state, wherein, in a state where there is wetting with a transparent liquid (8), an intensity of diffusely scattered light (12) is attenuated such that an intensity of light (11) that is diffusely scattered at the rough surface (10) in the non-wetted state is more than double the magnitude of an intensity of the light (12) that is diffusely scattered at the rough surface (10) in the wetted state.

## Revendications

1. Procédé de caractérisation d'un transport de liquide d'un liquide transparent (8) dans une structure micro-fluidique (5), dans lequel le liquide transparent (8) forme un ménisque (14), qui sépare une partie non remplie (16) d'une partie (17) de la structure micro-fluidique (5) remplie avec le liquide transparent (8), et dans lequel on capte de la lumière (11, 12) provenant d'un environnement (24) du ménisque (14) et on la mesure en vue d'une détermination d'une grandeur de mesure, qui est en corrélation avec un niveau de remplissage du liquide transparent (8) atteint par le ménisque (14), **caractérisé en ce que** l'on mesure comme grandeur de mesure une grandeur, qui est en corrélation avec une intensité d'une lumière (11, 12) dispersée de façon diffuse sur une paroi intérieure (9) de la structure micro-fluidique (5), **en ce que** l'on détecte pour l'évaluation de la grandeur de mesure une intensité de la lumière dispersée de façon diffuse, **en ce que** l'on calcule à partir de la grandeur de mesure une fraction de la paroi intérieure (9), qui est mouillée avec le liquide transparent (8), et **en ce que** l'on calcule à partir de la fraction calculée une grandeur qui permet la caractérisation du transport de liquide.

2. Procédé selon la revendication 1, caractérisé en ce la grandeur qui permet la caractérisation du transport de liquide est un niveau de remplissage.

3. Procédé selon l'une quelconque des revendications précédentes, **caractérisé en ce que** la grandeur qui permet la caractérisation du transport de liquide est une vitesse de progression, en particulier du ménisque (14), ou un débit.

4. Procédé selon l'une quelconque des revendications précédentes, **caractérisé en ce que** l'on calcule la fraction de la paroi intérieure (9), par le fait que l'on détermine une grandeur d'une partie de la structure micro-fluidique (5) remplie avec le liquide (8) ou on la met en rapport avec une grandeur totale correspondante de la structure micro-fluidique (5), et/ou **en ce que** la structure micro-fluidique (5) présente une hauteur constante, en particulier une section transversale constante, le long d'une direction d'extension (22).

5. Procédé selon l'une quelconque des revendications précédentes, **caractérisé en ce que** la paroi intérieure (9) forme une surface rugueuse (10).

6. Procédé selon l'une quelconque des revendications précédentes, **caractérisé en ce que** l'on utilise un liquide (8), qui remplit lors d'un mouillage des structures de rugosité de la surface (10) et/ou qui ne s'étale pas automatiquement sur la surface (10).

7. Procédé selon l'une quelconque des revendications précédentes, **caractérisé en ce que** la structure micro-fluidique (5) présente une hauteur qui permet une relation univoque entre une face mouillée de la paroi intérieure (9) et un volume rempli correspondant de la structure micro-fluidique (5).

8. Procédé selon l'une quelconque des revendications précédentes, **caractérisé en ce que** la structure micro-fluidique (5) est réalisée, en particulier par un choix de matériau du matériau de support (20) et/ou par un dimensionnement géométrique, de telle manière que la structure micro-fluidique (5) soit dans chaque partie ou bien entièrement remplie ou bien non mouillée, en particulier dans lequel un angle de mouillage au niveau du ménisque (14) est compris entre 45° et 135°.

9. Procédé selon l'une quelconque des revendications précédentes, **caractérisé en ce que** la structure micro-fluidique (5) est formée dans un matériau de support transparent (20).

10. Procédé selon l'une quelconque des revendications précédentes, **caractérisé en ce que** la structure micro-fluidique (5) est réalisée sous forme de ligne, de préférence en remplissant une face, en particulier sous forme de méandres.

11. Procédé selon l'une quelconque des revendications précédentes, **caractérisé en ce que** l'on éclaire le liquide (8) depuis l'extérieur de la structure micro-fluidique (5) et/ou **en ce que** l'on éclaire la structure micro-fluidique (5) par une méthode à fond noir et/ou d'une manière diffuse.

12. Procédé selon l'une quelconque des revendications précédentes, **caractérisé en ce que**, pour mesurer la grandeur de mesure, on saisit au moins une image de la structure micro-fluidique (5), en particulier dans lequel, pour mesurer la grandeur de mesure, on forme une image différentielle entre une image de la structure micro-fluidique (5) et une image antérieure de la structure micro-fluidique (5).

13. Procédé selon l'une quelconque des revendications précédentes, **caractérisé en ce que**, pour mesurer la grandeur de mesure, on détecte une intensité de la lumière dispersée de façon diffuse (11, 12), en particulier dans lequel, pour mesurer la grandeur de mesure, on établit une différence entre une intensité détectée de la lumière dispersée de façon diffuse (11, 12) et une intensité détectée antérieurement de la lumière dispersée de façon diffuse (11, 12).

14. Procédé selon l'une quelconque des revendications précédentes, **caractérisé en ce que** les indices de réfraction du liquide (8), du matériau de support (20) et de l'air (13) sont choisis de telle manière qu'une première différence entre les indices de réfraction de l'air (13) et du matériau de support (20) et une deuxième différence entre les indices de réfraction du liquide (8) et du matériau de support (20) soient en valeur à ce point différentes que l'on atteigne une variation d'intensité observable de la lumière dispersée au niveau de la transition entre l'air (13) et le liquide (8).

15. Dispositif de caractérisation de transport de liquide (1), **caractérisé par** des moyens pour l'exécution d'un procédé selon l'une quelconque des revendications précédentes, comprenant une chambre de logement (23) pour un matériau de support (20) qui présente une structure micro-fluidique (5) selon la revendication 16, dans lequel un détecteur (3) est configuré pour la saisie d'une grandeur qui est en corrélation avec une intensité d'une lumière (11, 12) dispersée de façon diffuse sur une paroi intérieure (9) de la structure micro-fluidique (5), dans lequel le détecteur (3) capte par l'intermédiaire d'une zone de détection (7) la lumière (11, 12) dispersée de façon diffuse, et dans lequel le détecteur (3) est disposé de telle manière que la lumière émise par un dispositif d'éclairage (2), qui est émise sous forme de lumière réfléchie par le matériau de support (20), ne puisse pas, être détectée mais circule le long du détecteur (3).

16. Matériel de support (20) comprenant une structure micro-fluidique (5), à utiliser avec un dispositif de caractérisation (1) selon la revendication précédente et/ou dans un procédé selon l'une quelconque des revendications 1 à 14, **caractérisé en ce que** la structure micro-fluidique (5) présente dans une partie, sur une paroi intérieure (9), une surface rugueuse (10) qui, dans un état non mouillé, disperse la lumière (11) de façon diffuse, dans lequel, dans un état mouillé avec un liquide transparent (8), une intensité d'une lumière (12) dispersée de façon diffuse est réduite, de telle manière qu'une intensité d'une lumière (11) dispersée de façon diffuse sur la surface rugueuse (10) à l'état non mouillé soit plus de deux fois plus élevée qu'une intensité de la lumière (12) dispersée de façon diffuse sur la surface rugueuse (10) à l'état mouillé.
